# EUROPÄISCHE PATENTANMELDUNG

(11) **EP 4 826 753 A1**
(43) Veröffentlichungstag der Anmeldung: **21.10.2026**
(21) Anmeldenummer: 26172480.1
(22) Anmeldetag: 15.04.2026
(51) Int. Cl.: H01H 47/00, G05B 9/02

(54) **SICHERHEITSSCHALTVORRICHTUNG**

(30) Priorität: 17.04.2025 DE 102025115326
(71) Anmelder: Pilz GmbH & Co. KG, 73760 Ostfildern (DE)
(72) Erfinder: Oerder, Marius, 73760 Ostfildern (DE); Seid, Jörg, 73760 Ostfildern (DE)
(74) Vertreter: Manske, Jörg

(57) **Zusammenfassung**

Die Erfindung betrifft eine Sicherheitsschaltvorrichtung (100), mit einer Not-Befehlseinrichtung (101), die zwei in Reihe geschaltete Schaltmittel (102, 103), Anschlüsse (E12, E21) und ein Auslösemittel (104) aufweist, das bei Auslösung beide Schaltmittel gemeinsam umschaltet, insbesondere elektrisch sperrt. Eine Auswerteeinrichtung (105) mit Spannungsquelle (118, 119) besitzt einen ersten Anschluss (S12), der über eine erste Leitung (106) mit dem Anschluss (E12) verbunden ist, und einen zweiten Anschluss (S21), der über eine zweite Leitung (107) mit dem Anschluss (E21) verbunden ist. In einem Ausgangskreis ist mindestens ein Schaltelement (111, 112) vorgesehen, an das ein Verbraucher anschließbar ist. Die Auswerteeinrichtung (105) umfasst ein erstes Kanalauswertemittel (108) und ein zweites Kanalauswertemittel (109), die an die Anschlüsse (S12, S21) angeschlossen sind. Das erste Kanalauswertemittel (108) misst die Spannung zwischen dem Anschluss (S12) und dem Anschluss (S21) sowie den durch den Anschluss (S12) fließenden Strom und bestimmt daraus einen ersten Widerstandswert (R1). Das zweite Kanalauswertemittel (109) misst die Spannung zwischen dem Anschluss (S21) und dem Anschluss (S12) sowie den durch den Anschluss (S21) fließenden Strom und ermittelt daraus einen zweiten Widerstandswert (R2). Abhängig von den Widerstandswerten (R1, R2) steuern die Kanalauswertemittel das Schaltelement (111, 112) so an, dass es in einen leitenden oder sperrenden Zustand geschaltet wird.

## Beschreibung

Die vorliegende Erfindung betrifft eine Sicherheitsschaltvorrichtung.

Aus dem Stand der Technik sind Sicherheitsschaltvorrichtungen in unterschiedlichen Ausführungsformen bekannt. Derartige Sicherheitsschaltvorrichtungen dienen dem Zweck, eine Maschine im Falle einer unvorhergesehenen Gefahrensituation in einen ungefährlichen Betriebszustand zu überführen. Denn gemäß der Verordnung EU 2023/1230 über Maschinen darf von einer Maschine keine Gefährdung für Mensch und Umwelt ausgehen. In derartigen Sicherheitsschaltvorrichtungen sind Not-Befehlseinrichtungen implementiert, die bei Auftreten einer Gefahrensituation durch eine manuelle Auslösung oder durch eine automatisierte Auslösung unter Verwendung entsprechender Sensormittel ausgelöst werden. Zusammen mit der Auswerteeinrichtung können in der Sicherheitsschaltvorrichtung zum Beispiel Not-Halt- oder Not-Aus-Funktionen implementiert sein. Mittels einer Not-Halt-Funktion kann ein Schutz vor gefahrbringenden Bewegungen einer Maschine erreicht werden, ohne die Maschine komplett abzuschalten, wohingegen eine Not-Aus-Funktion die Maschine komplett von der elektrischen Versorgungsspannung trennt, um einen Schutz vor gefahrbringenden elektrischen Spannungen zu erreichen. Die Norm EN ISO 13849-1:2023 schreibt in diesem Zusammenhang vor, dass Sicherheitsschaltvorrichtungen mit einer Not-Halt-Funktion mindestens den Performance Level c (PLc) erreichen müssen.

Normativ bedingt sind für Sicherheitsschaltvorrichtungen mit einem Performance-Level d (PLd) oder e (PLe) generell zweikanalige Architekturen der Kategorie 3 oder 4 vorzusehen, um eine entsprechende Redundanz zu schaffen. Die einschlägigen Normen geben allerdings nicht vor, wie diese Zweikanaligkeit konkret realisiert werden muss. Bislang wird die geforderte Zweikanaligkeit einer Not-Befehlseinrichtung einer Sicherheitsschaltvorrichtung stets durch eine völlig unabhängige zweikanalige Verdrahtung erreicht, indem zum Beispiel zwei elektrische Schaltmittel, die als Öffnerkontakte ausgebildet sind, jeweils separat mit einem Leiterpaar betrieben werden, so dass für die Bereitstellung der geforderten Zweikanaligkeit stets zwei Leiterpaare - also vier Leiter - notwendig sind. Dadurch entsteht eine zweikanalige Struktur, bei der eine erste Kanalauswerteeinrichtung den Schaltzustand des ersten Schaltmittels auswertet und eine zweite Kanalauswerteeinrichtung den Schaltzustand des zweiten Schaltmittels auswertet. Die erste Kanalauswerteeinrichtung und das erste Schaltmittel bilden somit aus funktionaler Sicht einen ersten Kanal. In analoger Weise bilden die zweite Kanalauswerteeinrichtung und das zweite Schaltmittel einen zweiten Kanal. Dieses aus dem Stand der Technik bekannte Konzept einer Sicherheitsschaltvorrichtung weist somit einen entsprechend hohen Verdrahtungsaufwand auf.

Die Aufgabe der Erfindung besteht darin, eine Sicherheitsschaltvorrichtung derart weiterzubilden, dass der Verdrahtungsaufwand geringer ist und trotzdem die Anforderungen an die Zweikanaligkeit, wie sie in den einschlägigen Normen gefordert werden, erfüllt sind.

Die Lösung dieser Aufgabe liefert eine Sicherheitsschaltvorrichtung mit den Merkmalen des Anspruchs 1. Die Unteransprüche betreffen vorteilhafte Weiterbildungen der Erfindung.

Eine erfindungsgemäße Sicherheitsschaltvorrichtung umfasst - eine Not-Befehlseinrichtung, die ein erstes elektrisches Schaltmittel und ein zweites elektrisches Schaltmittel, die in einem Eingangskreis elektrisch in Reihe geschaltet sind, aufweist, wobei die Not-Befehlseinrichtung einen ersten Anschluss und einen zweiten Anschluss im Eingangskreis, die mit den Schaltmitteln elektrisch verbunden sind, sowie ein Auslösemittel aufweist, welches dazu ausgebildet ist, bei einer Auslösung die Schaltzustände der beiden Schaltmittel gemeinsam zu verändern, insbesondere die beiden Schaltmittel elektrisch zu sperren,
- eine Auswerteeinrichtung mit einer Spannungsquelle, einem ersten Anschluss, der mittels einer ersten Anschlussleitung an den ersten Anschluss der Not-Befehlseinrichtung angeschlossen ist, und mit einem zweiten Anschluss, der mittels einer zweiten Anschlussleitung an den zweiten Anschluss der Not-Befehlseinrichtung angeschlossen ist,
- zumindest ein Schaltelement in einem Ausgangskreis, an das ein Verbraucher, insbesondere eine Maschine, anschließbar ist,
wobei die Auswerteeinrichtung ein erstes Kanalauswertemittel und ein zweites Kanalauswertemittel aufweist, die beide sowohl an den ersten Anschluss als auch an den zweiten Anschluss der Auswerteeinrichtung angeschlossen sind, wobei das erste Kanalauswertemittel dazu ausgebildet ist, eine elektrische Spannung zwischen dem ersten Anschluss und dem zweiten Anschluss und den Strom, der durch den ersten Anschluss fließt, zu messen und daraus einen ersten Widerstandswert zu bestimmen, und wobei das zweite Kanalauswertemittel dazu ausgebildet ist, eine elektrische Spannung zwischen dem zweiten Anschluss und dem ersten Anschluss und den Strom, der durch den zweiten Anschluss fließt, zu messen und daraus einen zweiten Widerstandswert zu ermitteln, und wobei die Kanalauswertemittel dazu ausgebildet sind, das elektrische Schaltelement im Ausgangskreis derart anzusteuern, dass es in Abhängigkeit von den ermittelten Widerstandwerten in einen elektrisch leitenden oder in einen elektrisch sperrenden Zustand geschaltet wird.

Der vorliegenden Erfindung liegt somit die Idee zugrunde, die durch die einschlägigen Normen geforderte Zweikanaligkeit nicht durch eine doppelte Verdrahtung der beiden elektrischen Schaltmittel des Eingangskreises zur Verfügung zu stellen, sondern dadurch, dass die Schaltmittel elektrisch in Reihe geschaltet sind und beide Kanalauswertemittel der Auswerteeinrichtung die Möglichkeit haben, den elektrischen Strom und die elektrische Spannung im Eingangskreis zu messen und über den berechneten Widerstand auszuwerten, woraus sich die normativ geforderte Zweikanaligkeit der Sicherheitsschaltvorrichtung ableiten lässt. Hierbei messen der erste und der zweite Kanal parallel dieselbe Spannung an den in Reihe geschalteten Anschlüssen sowie an zwei Stellen den Strom, der durch die Anschlüsse fließt. Zwei unabhängige Prozesse berechnen dann redundant die Widerstandswerte dieser Reihenschaltung und vergleichen sie.

Die Vorteile dieses erfindungsgemäßen Funktionsprinzips sind insbesondere eine Kostenersparnis durch die Verwendung von lediglich zwei Leitungen zum Anschluss des Eingangskreises an die Auswerteeinrichtung, ein geringerer Installationsaufwand sowie ein geringerer Aufwand für die Prüfung der Installation der Sicherheitsschaltvorrichtung. Der üblicherweise erhöhte Schaltungsaufwand einer Sicherheitsschaltvorrichtung kann durch die gemäß der Erfindung vorgesehene Auswertung der elektrischen Spannungen und der elektrischen Ströme und der daraus resultierenden Widerstandswerte mittels der beiden Kanalauswertemittel in überschaubaren Grenzen gehalten werden. Die normative Anforderung der Zweikanaligkeit der Sicherheitsschaltvorrichtung gemäß der Norm DIN EN 13849-1:2023 wird dabei in vorteilhafter Weise ebenfalls erfüllt. Das mindestens eine Schaltelement im Ausgangskreis kann zum Beispiel als Relais, insbesondere als Doppelanker-Relais, als Schütz oder als Halbleiter-Schaltelement ausgebildet sein.

Das erfindungsgemäße Konzept lässt sich bei einer Vielzahl von Not-Befehlsanwendungen mit zwei Schaltmitteln im Eingangskreis einsetzen. Neben manuell auslösbaren Not-Halt- beziehungsweise Not-Aus-Befehlsgeräten kann das Konzept zum Beispiel auch auf Lichtschranken, Türkontakte, Zuhaltungen etc. mit zwei Schaltmitteln übertragen werden.

Es besteht die Möglichkeit, die Auswerte- und Steuerungsfunktionen der beiden Kanalauswertemittel in einem einzigen Microcontroller zu realisieren. Zwei separate Microcontroller, die in geeigneter Weise miteinander kommunizieren können, erhöhen jedoch das Sicherheitsniveau, da wechselseitig die Funktion des jeweils anderen Microcontrollers überprüft werden kann und im Fehlerfall das zumindest eine Schaltelement im Ausgangskreis in einen elektrisch sperrenden Zustand überführt werden kann.

In einer vorteilhaften Ausführungsform wird vorgeschlagen, dass die Kanalauswertemittel dazu ausgebildet sind, das elektrische Schaltelement im Ausgangskreis nur dann derart anzusteuern, dass es elektrisch leitend wird, wenn von beiden Kanalauswertemitteln übereinstimmend ein Widerstandswert ermittelt worden ist, der eine geschlossene Stellung der beiden Schaltmittel im Eingangskreis indiziert. Sobald demgegenüber hohe Widerstandswerte gemessen werden, liegt eine Voll- oder Teilbetätigung der beiden elektrischen Schaltmittel vor. Dieses hat zur Folge, dass die beiden Kanalauswertemittel das zumindest eine Schaltelement im Ausgangskreis derart ansteuern, dass es elektrisch sperrend wird. Die Arbeitskontakte der elektrischen Schaltelemente im Ausgangskreis beider Kanäle dürfen also nur bei übereinstimmendem Ergebnis, dass das Auslösemittel nicht ausgelöst wurde und somit die Schaltmittel im Eingangskreis nicht geöffnet wurden, in einen elektrisch leitenden Zustand überführt werden.

In einer vorteilhaften Weiterbildung wird vorgeschlagen, dass die Sicherheitsschaltvorrichtung einen Querschlusserfassungswiderstand aufweist, der mit den beiden Schaltmitteln des Eingangskreises elektrisch in Reihe geschaltet ist, insbesondere zwischen den beiden Schaltmitteln des Eingangskreises elektrisch in Reihe geschaltet ist. Dadurch wird erreicht, dass die Widerstandswerte, die mithilfe der beiden Kanalauswertemittel bestimmt werden, zumindest den Widerstandswert des Querschlusserfassungswiderstands haben müssen, sofern kein Querschluss vorliegt. Sind diese Widerstandswerte kleiner als der Widerstandswert des Querschlusserfassungswiderstands, liegt ein Querschluss innerhalb des Eingangskreises vor. Die beiden Kanalauswertemittel steuern das mindestens eine Schaltelement im Ausgangskreis derart an, dass dieses elektrisch sperrend wird. Vorzugsweise kann für den Querschlusserfassungswiderstand ein Widerstandstyp verwendet werden, mittels dessen sich Kurzschlüsse und Temperaturdrifts in vorteilhafter Weise ausschließen lassen. Zum Beispiel eignet sich hierfür ein Kohleschicht-MELF-Widerstand, ein Metallfilm-MELF-Widerstand oder ein Drahtwiderstand, da bei diesen der Versagensfall "Kurzschluss" ausgeschlossen werden kann. Anstelle des Querschlusserfassungswiderstands können auch andere Bauteile mit Widerstandseigenschaften, wie zum Beispiel Kondensatoren, Induktivitäten oder Dioden, verwendet werden.

In einer weiteren vorteilhaften Weiterbildung besteht die Möglichkeit, dass die Sicherheitsschaltvorrichtung zwei Teilbetätigungserfassungswiderstände aufweist, wobei ein erster Teilbetätigungserfassungswiderstand im Eingangskreis parallel zum ersten elektrischen Schaltmittel geschaltet ist und ein zweiter Teilbetätigungserfassungswiderstand im Eingangskreis parallel zum zweiten elektrischen Schaltmittel geschaltet ist. Dadurch können in vorteilhafter Weise Teilbetätigungen der beiden Schaltmittel im Eingangskreis erfasst werden.

Vorzugsweise können die Widerstandswerte der Teilbetätigungserfassungswiderstände unterschiedlich gewählt sein. Dadurch ist in vorteilhafter Weise eine Erkennung möglich, welches der beiden elektrischen Schaltmittel des Eingangskreises teilbetätigt wurde. Alternativ können die Widerstandswerte der Teilbetätigungserfassungswiderstände auch gleich sein. Als Teilbetätigungserfassungswiderstände können vorteilhaft solche Widerstandstypen verwendet werden, mittels derer sich Kurzschlüsse und Temperaturdrifts wirksam ausschließen lassen. Hierfür eignen sich zum Beispiel ebenfalls Kohleschicht-MELF-Widerstände, Metallfilm-MELF-Widerstände oder Drahtwiderstände. Anstelle der Teilbetätigungserfassungswiderstände können auch andere Bauteile mit Widerstandseigenschaften, wie zum Beispiel Kondensatoren, Induktivitäten oder Dioden, verwendet werden.

In einer bevorzugten Ausführungsform wird vorgeschlagen, dass eines der beiden Kanalauswertemittel dazu ausgebildet ist, ein Pulsmuster zu erzeugen, und das andere der beiden Kanalauswertemittel dazu ausgebildet ist, das Pulsmuster zu empfangen und auszuwerten. Dadurch können in vorteilhafter Weise so genannte "Stuck-at-Fehler", bei denen es sich um Fehler handelt, die in den Mess- und Auswerteschaltungen selbst auftreten, ebenfalls detektiert werden.

In einer Ausführungsform besteht die Möglichkeit, dass die Kanalauswertemittel dazu ausgebildet sind, die von ihnen gemessenen Spannungen und Ströme miteinander zu vergleichen und bei einer Abweichung, welche außerhalb der Messtoleranz liegt, das elektrische Schaltelement im Ausgangskreis derart anzusteuern, dass es in einen elektrisch sperrenden Zustand geschaltet wird. Vorzugsweise wird hierbei die Erfassung eines Drifts in den Spannungsmessschaltungen und Strommessschaltungen, die in den Kanalauswertemitteln implementiert sind, berücksichtigt.

In einer Ausführungsform kann vorgesehen sein, dass die Schaltmittel aktiv elektrisch schaltbar ausgebildet sind und dass die Kanalauswertemittel dazu ausgebildet sind, durch eine Umkehrung der Stromrichtung eine Energieversorgung der elektrisch schaltbaren Schaltmittel bereitzustellen. Die Not-Befehlseinrichtung mit aktiv elektrisch schaltbaren Schaltmitteln kann zum Beispiel als aktivierbarer Not-Halt oder als Türschalter, welcher auf dem Prinzip eines induktiven Näherungsschalters basiert, ausgeführt sein. Über die beiden ohnehin vorgesehenen Anschlussleitungen lassen sich somit in vorteilhafter Weise ohne zusätzlichen Verdrahtungsaufwand auch aktiv arbeitende Schaltmittel im Eingangskreis verdrahten und so deren Energieversorgung bereitstellen, ohne dass Fremdenergie über ein weiteres Adernpaar zur Verfügung gestellt werden muss. Die Stromrichtung wird hierbei periodisch gewechselt, um dadurch zwischen den Zuständen "Auswertung" und "Energieversorgung" hin und her zu wechseln. Vorzugsweise kann hierbei die Sicherheitsschaltvorrichtung im Eingangskreis der Not-Befehlseinrichtung ein Energiespeichermittel aufweisen. Dieses ermöglicht es, die beiden Schaltmittel des Eingangskreises kurzzeitig elektrisch zu versorgen, während die Auswertung der Schaltzustände stattfindet. Das Energiespeichermittel kann zum Beispiel durch einen Energiespeicherkondensator gebildet sein, der parallel zu den elektrischen Schaltmitteln des Eingangskreises geschaltet ist und elektrisch in Reihe mit einer Diode, welche den Stromfluss nur in eine Richtung zulässt, geschaltet ist.

In einer vorteilhaften Weiterbildung wird vorgeschlagen, dass die Sicherheitsschaltvorrichtung dazu ausgebildet ist, eine aktive Spannungsversorgung für das Schaltelement im Ausgangskreis bereitzustellen. Die Ansteuerung des zumindest einen ausgangsseitigen, beispielsweise als Doppel-Ankerrelais ausgebildeten Schaltelements erfolgt über zwei diversitäre Wege. Zum einen wird über die beiden Anschlussleitungen der Sicherheitsschaltvorrichtung die Spannungsversorgung für das Schaltelement im Ausgangskreis bereitgestellt, wenn die beiden Schaltmittel im Eingangskreis geschlossen sind und zwei Halbleiterschaltelemente, insbesondere Transistoren, im Ausgangskreis, die mit dem Schaltelement elektrisch in Reihe geschaltet sind und jeweils von einem der Kanalauswertemittel angesteuert werden, elektrisch leitend sind. Zum anderen kann wiederum eine Kommunikation über die Anschlussleitungen erfolgen, um die Schaltzustände der Schaltmittel im Eingangskreis in der oben erläuterten Weise zu erfassen.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine schematische Darstellung, die das grundlegende Funktionsprinzip einer Sicherheitsschaltvorrichtung gemäß einem ersten Ausführungsbeispiel der vorliegenden Erfindung veranschaulicht,
- Fig. 2: eine schematische Darstellung einer Sicherheitsschaltvorrichtung, die gemäß einem zweiten Ausführungsbeispiel der Erfindung ausgeführt ist,
- Fig. 3: eine schematische Darstellung einer Sicherheitsschaltvorrichtung, die gemäß einem dritten Ausführungsbeispiel der Erfindung ausgeführt ist,
- Fig. 4: eine detailliertere Darstellung der Schaltungstopologie der Sicherheitsschaltvorrichtung gemäß Fig. 3,
- Fig. 5: eine Weiterbildung der Sicherheitsschaltvorrichtung gemäß Fig. 4,
- Fig. 6: eine detaillierte Darstellung der Schaltungstopologie einer Sicherheitsschaltvorrichtung, die gemäß einem weiteren Ausführungsbeispiel der Erfindung ausgeführt ist.

Es ist nicht notwendig, dass eine erfindungsgemäße Sicherheitsschaltvorrichtung 100 alle nachfolgend beschriebenen Merkmale aufweist. Es ist auch möglich, dass eine erfindungsgemäße Sicherheitsschaltvorrichtung 100 nur einzelne Merkmale der nachfolgend beschriebenen Ausführungsbeispiele aufweist.

Die Sicherheitsschaltvorrichtung 100 weist eine Not-Befehlseinrichtung 101 auf, die einen Eingangskreis umfasst und ein erstes Schaltmittel 102 sowie ein zweites Schaltmittel 103 aufweist, die innerhalb des Eingangskreises elektrisch in Reihe geschaltet sind und als Öffnerkontakte ausgebildet sind. Die Sicherheitsschaltvorrichtung 100 umfasst ferner ein Auslösemittel 104, welches bei einer Auslösung die Schaltzustände beider Schaltmittel 102, 103 gemeinsam, insbesondere gleichzeitig, verändert. Ein Beispiel für ein derartiges Auslösemittel 104 ist ein Auslösetaster oder ein Auslöseknopf, der von einem Nutzer im Falle einer Gefahrensituation manuell betätigt werden kann, um insbesondere einen Not-Halt oder ein Not-Aus einer an die Sicherheitsschaltvorrichtung 100 angeschlossenen Maschine zu initiieren. Durch einen Not-Aus wird die Maschine von der elektrischen Versorgungsspannung getrennt, wohingegen bei einem Not-Halt eine aktive Stillsetzung der Bewegung der Maschine erfolgt. Da die Schaltmittel 102, 103 als Öffnerkontakte ausgebildet sind, werden sie bei einer manuellen Betätigung des Auslösemittels 104 geöffnet. In weiteren Ausführungsformen kann das Auslösemittel 104 zum Beispiel auch über ein oder mehrere daran angeschlossene Sensormittel, die unter Sicherheitsaspekten kritische Betriebszustände der Maschine, wie zum Beispiel Drücke oder Temperaturen, erfassen, automatisiert ausgelöst werden.

Darüber hinaus weist die Sicherheitsschaltvorrichtung 100 eine Auswerteeinrichtung 105 mit einem ersten Anschluss S12 und mit einem zweiten Anschluss S21 auf. Mittels einer ersten Anschlussleitung 106 ist der erste Anschluss S12 der Auswerteeinrichtung 105 mit einem ersten Anschluss E12 des Eingangskreises der Not-Befehlseinrichtung 101 verbunden. Über eine zweite Anschlussleitung 107 ist der zweite Anschluss S21 der Auswerteeinrichtung 105 mit einem zweiten Anschluss E21 des Eingangskreises der Not-Befehlseinrichtung 101 elektrisch verbunden.

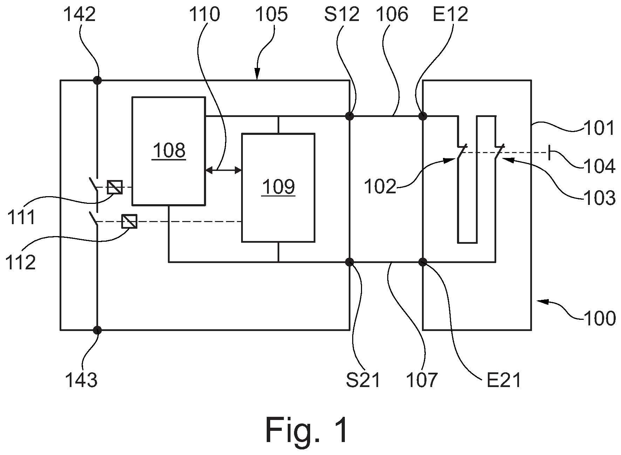

Ferner verfügt die Auswerteeinrichtung 105 über ein erstes Kanalauswertemittel 108 und ein zweites Kanalauswertemittel 109, die elektrisch sowohl an den ersten Anschluss S12 als auch an den zweiten Anschluss S21 der Auswerteeinrichtung 105 angeschlossen sind. Über eine bidirektionale Kommunikationsleitung 110, insbesondere über einen bidirektionalen Datenbus, stehen die beiden Kanalauswertemittel 108, 109 miteinander in Kommunikationsverbindung, so dass in vorteilhafter Weise ein Datenaustausch zwischen den beiden Kanalauswertemitteln 108, 109 möglich ist und darüber hinaus auch eine wechselseitige Datenauswertung erfolgen kann. Anstelle der bidirektionalen Kommunikationsleitung 110 können auch zwei gegenläufige unidirektionale Kommunikationskanäle vorgesehen sein. Das erste Kanalauswertemittel 108 ist somit funktional einem ersten Kanal der Sicherheitsschaltvorrichtung 100 zugeordnet und das zweite Kanalauswertemittel 109 ist funktional einem zweiten Kanal der Sicherheitsschaltvorrichtung 100 zugeordnet. Die Auswerteeinrichtung 105 verfügt über eine in Fig. 1 nicht explizit dargestellte Spannungsquelle, so dass im elektrisch leitenden Zustand der Schaltmittel 102, 103 ein Strom durch den Eingangskreis fließen kann. Einzelheiten der Zweikanaligkeit und mögliche Implementierungen der Auswerteeinrichtung 105 mit den beiden Kanalauswertemitteln 108, 109, werden weiter unten noch näher erläutert.

Das erste Kanalauswertemittel 108 ist ausgangsseitig an ein erstes elektrisches Schaltelement 111 angeschlossen und ist dazu ausgebildet, das erste elektrische Schaltelement 111, welches einen Schließerkontakt umfasst, aus einem elektrisch sperrenden in einen elektrisch leitenden Zustand und umgekehrt zu überführen. Das zweite Kanalauswertemittel 109 ist ausgangsseitig an ein zweites elektrisches Schaltelement 112 angeschlossen und ist dazu ausgebildet, das zweite elektrische Schaltelement 112, welches einen Schließerkontakt umfasst, aus einem elektrisch sperrenden in einen elektrisch leitenden Zustand und umgekehrt zu überführen. Das erste elektrische Schaltelement 111 und das zweite elektrische Schaltelement 112 sind im Ausgangskreis elektrisch in Reihe geschaltet und vorzugsweise als Relais oder Schütze ausgebildet. Die elektrischen Schaltelemente 111, 112 können zum Beispiel auch als Halbleiter-Schaltelemente ausgebildet sein. Im Rahmen der weiteren Beschreibung soll angenommen werden, dass die elektrischen Schaltelemente 111, 112 als Relais ausgebildet sind. Im Ausgangskreis sind zwei Ausgangsanschlüsse 142, 143 vorgesehen, die den Anschluss einer Maschine oder ganz allgemein eines Verbrauchers ermöglichen.

Die in Fig. 1 gezeigte grundlegende Schaltungstoplogie ermöglicht es in vorteilhafter Weise, die geforderte Zweikanaligkeit der Sicherheitsschaltvorrichtung 100 nicht - wie es aus dem Stand der Technik bekannt ist - durch eine doppelte Verdrahtung jedes der beiden Schaltmittel 102, 103 der Not-Befehlseinrichtung 101 mit der Auswerteeinrichtung 105 zu erreichen, sondern dadurch zu erzielen, dass das erste Schaltmittel 102 und das zweite Schaltmittel 103 im Eingangskreis elektrisch in Reihe geschaltet sind und dass darüber hinaus das erste Kanalauswertemittel 108 und das zweite Kanalauswertemittel 109, die jeweils funktional einem der beiden Kanäle der Sicherheitsschaltvorrichtung 100 zugeordnet sind, dazu ausgebildet sind, den elektrischen Strom und die elektrische Spannung im Eingangskreis in der nachstehend skizzierten Weise zu messen. Die aus diesen Größen durch Anwendung des Ohmschen Gesetzes bestimmbaren Widerstandwerte R1, R2 werden ausgewertet, so dass sich daraus die normativ geforderte Zweikanaligkeit ableiten lässt.

Das erste Kanalauswertemittel 108, welches dem ersten Kanal zugeordnet ist, ist dazu ausgebildet, die elektrische Spannung (Klemmenspannung) zwischen dem ersten Anschluss S12 und dem zweiten Anschluss S21 der Auswerteeinrichtung 105 sowie den Strom, der durch den ersten Anschluss S12 fließt, zu messen und daraus einen ersten Widerstandswert R1 zu bestimmen. Das zweite Kanalauswertemittel 109, welches dem zweiten Kanal zugeordnet ist, ist dazu ausgebildet, die elektrische Spannung (Klemmenspannung) zwischen dem zweiten Anschluss S21 und dem ersten Anschluss S12 sowie den Strom, der durch den zweiten Anschluss S21 fließt, zu messen und daraus einen zweiten Widerstandswert R2 zu bestimmen.

Wenn von beiden Kanalauswertemitteln 108, 109 und somit in beiden Kanälen übereinstimmend ein geringer Widerstandswert R1, R2 in der Größenordnung des Leitungswiderstands der Anschlussleitungen 106, 107 gemessen wird, wurden beide Schaltmittel 102, 103 im Eingangskreis nicht betätigt. Sobald hohe Widerstandswerte R1 und R2 gemessen werden, liegt eine Voll- oder Teilbetätigung der beiden elektrischen Schaltmittel 102, 103 vor. Dieses hat zur Folge, dass die beiden Kanalauswertemittel 108, 109 die Stromzufuhr zu den vorliegend als Relais ausgebildeten Schaltelementen 111, 112 im Ausgangskreis unterbrechen. Die Arbeitskontakte der elektrischen Schaltelemente 111, 112 im Ausgangskreis beider Kanäle dürfen nur bei übereinstimmendem Ergebnis, dass das Auslösemittel 104 nicht ausgelöst wurde und somit die Schaltmittel 102, 103 im Eingangskreis nicht geöffnet wurden, geschlossen werden und damit in einen elektrisch leitenden Zustand überführt werden.

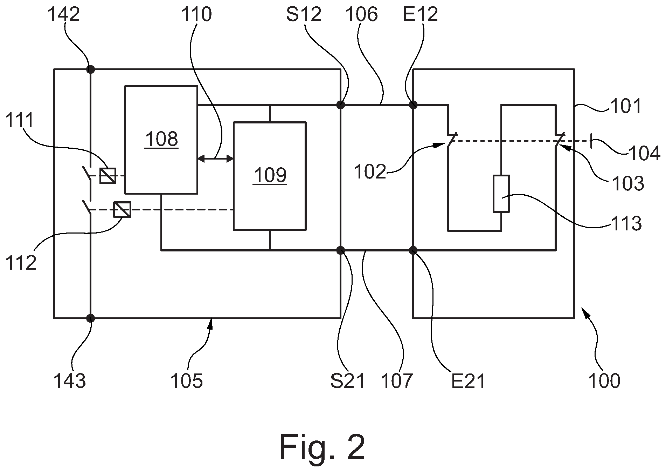

Unter Bezugnahme auf Fig. 2 ist dort ein weiteres Ausführungsbeispiel einer Sicherheitsschaltvorrichtung 100 dargestellt. Die grundlegende Schaltungstopologie entspricht derjenigen des ersten Ausführungsbeispiels, so dass zur Vermeidung von Wiederholungen auf die obige Beschreibung verwiesen werden kann. Nachfolgend sollen daher nur die Unterschiede näher erläutert werden.

Die in Fig. 1 stark vereinfacht dargestellte Schaltungstopologie der Sicherheitsschaltvorrichtung 100 ermöglicht es nicht, einen Querschluss innerhalb des Eingangskreises zu erfassen. Um diesem Problem abzuhelfen, ist in dem zweiten Ausführungsbeispiel in Fig. 2 zwischen den beiden Schaltmitteln 102, 103 des Eingangskreises ein Querschlusserfassungswiderstand 113 elektrisch in Reihe geschaltet. Dieses hat zur Folge, dass die Widerstände R1 und R2, die mithilfe der beiden Kanalauswertemittel 108, 109 bestimmt werden, zumindest den Widerstandswert des Querschlusserfassungswiderstands 113 haben müssen, sofern kein Querschluss vorliegt. Sind die Widerstandswerte R1 und R2, die mithilfe der Kanalauswertemittel 108, 109 in der oben erläuterten Weise bestimmt werden, kleiner als der Widerstandswert des Querschlusserfassungswiderstands 113, liegt ein Querschluss innerhalb des Eingangskreises 101 zwischen den beiden Anschlüssen S12, S21 vor. Die beiden Kanalauswertemittel 108, 109 unterbrechen in diesem Fall die Stromzufuhr zu den beiden vorliegend als Relais ausgebildeten Schaltelementen 111, 112, so dass deren Arbeitskontakte geöffnet werden. Vorzugsweise kann für den Querschlusserfassungswiderstand 113 ein Widerstandstyp verwendet werden, mittels dessen sich Kurzschlüsse und Widerstandsdrifts in vorteilhafter Weise ausschließen lassen. Zum Beispiel eignet sich hierfür ein Kohleschicht-MELF-Widerstand, ein Metallfilm-MELF-Widerstand oder ein Drahtwiderstand.

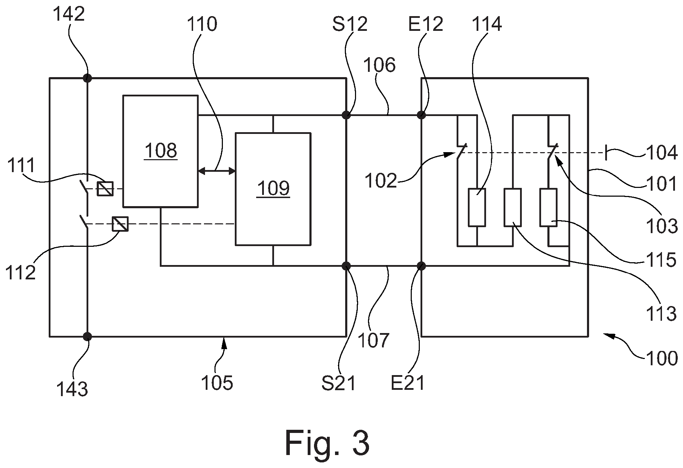

Fig. 3 zeigt eine Sicherheitsschaltvorrichtung 100, die gemäß einem weiteren Ausführungsbeispiel der Erfindung ausgeführt ist. Bei dem vorstehend unter Bezugnahme auf Fig. 2 beschriebenen Ausführungsbeispiel ist es nicht möglich, eine Teilbetätigung der beiden elektrischen Schaltmittel 102, 103 zu erfassen. Um eine derartige Erfassung einer Teilbetätigung zu ermöglichen, sind zwei zusätzliche Teilbetätigungserfassungswiderstände 114, 115 vorgesehen. Ein erster Teilbetätigungserfassungswiderstand 114 ist parallel zum ersten elektrischen Schaltmittel 102 geschaltet und ein zweiter Teilbetätigungserfassungswiderstand 115 ist parallel zum zweiten elektrischen Schaltmittel 103 geschaltet.

Vorzugsweise können die Widerstandswerte der beiden Teilbetätigungserfassungswiderstände 114, 115 unterschiedlich gewählt sein, so dass eine Erkennung möglich ist, welches der beiden elektrischen Schaltmittel 102, 103 des Eingangskreises 101 teilbetätigt wurde. Als Teilbetätigungserfassungswiderstände 114, 115 können vorteilhaft solche Widerstandstypen verwendet werden, mittels derer sich Kurzschlüsse und Widerstandsdrifts wirksam ausschließen lassen. Hierfür eignen sich zum Beispiel ebenfalls Kohleschicht-MELF-Widerstände, Metallfilm-MELF-Widerstände oder Drahtwiderstände.

Es besteht die Möglichkeit, dass bei den in Fig. 1 bis 3 beschriebenen Schaltungen so genannte "Stuck-at-Fehler", also Fehler in den Mess- und Auswerteschaltungen selbst, auftreten. Diese lassen sich bisher noch nicht erkennen. Wenn zum Beispiel der erste Kanal um eine Testung erweitert wird, kann auch diesem Problem abgeholfen werden. Beispielsweise kann das erste Kanalauswertemittel 108 ein Pulsmuster erzeugen, welches vom zweiten Kanalauswertemittel 109 empfangen wird, sofern kein Stuck-at-Fehler vorliegt. Bei erfolgreichem Empfang des erzeugten Pulsmusters liegt also mit anderen Worten kein Stuck-at-Fehler vor.

Eine weitere technische Realisierungsmöglichkeit, um Stuck-at-Fehler zu erkennen, ist zum Beispiel auch die Abschaltung des Messstroms. Ein Microcontroller des ersten Kanalauswertemittels 108 für den ersten Kanal teilt einem Microcontroller des zweiten Kanalauswertemittels 109 für den zweiten Kanal mit, dass eine Testung vorgenommen wird. Daraufhin wird der Microcontroller des ersten Kanalauswertemittels 108 einen für eine Signaltaktung vorgesehen Transistor zur Taktung sperren. Beide Microcontroller messen dann den Strom und die Spannung Null. Ist dieses übereinstimmend der Fall, kann von einer zumindest in Bezug auf mögliche Stuck-at-Fehler fehlerfrei arbeitenden Hardware ausgegangen werden.

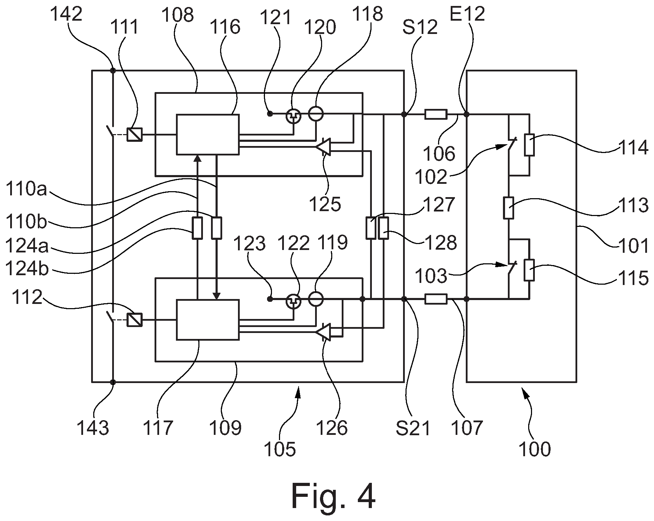

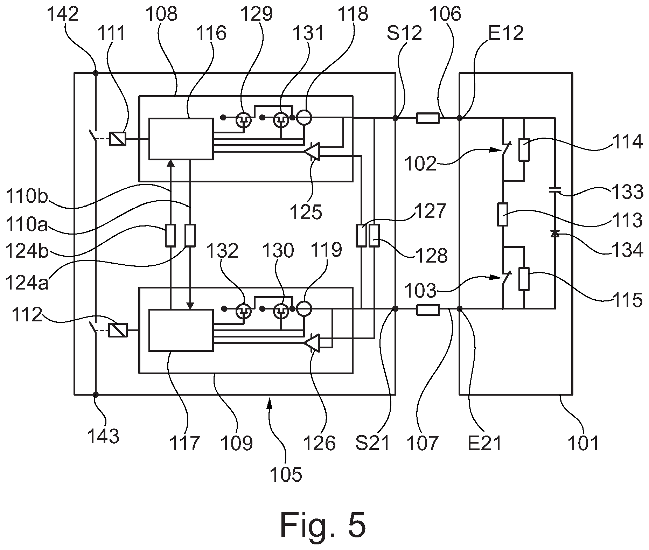

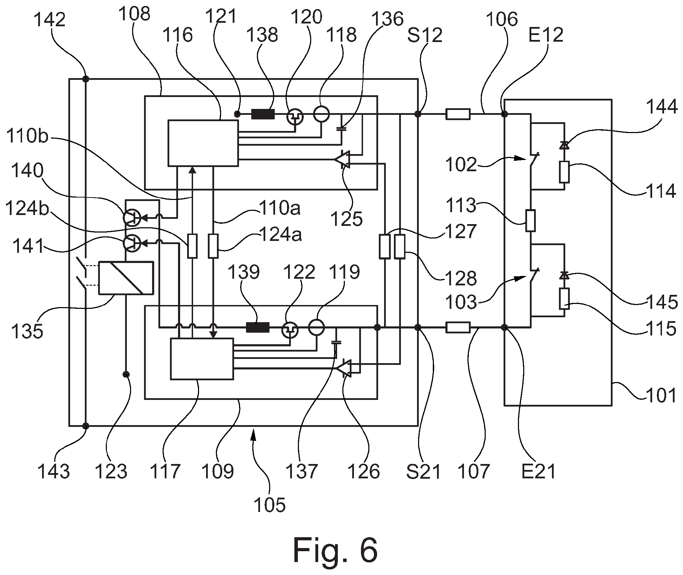

Ausgehend von der in Fig. 3 dargestellten Prinzipschaltung, welche die Erfassung von Querschlüssen und von Teilbetätigungen der beiden Schaltmittel 102, 103 innerhalb des Eingangskreises ermöglicht, sollen nachfolgend unter Bezugnahme auf Fig. 4 nähere Einzelheiten der Auswerteeinrichtung 105 mit den beiden Kanalauswertemitteln 108, 109 näher erläutert werden, die sich grundlegend auch auf die in Fig. 1 und 2 dargestellten Ausführungsbeispiele übertragen lassen, wenn keine Querschlusserkennung beziehungsweise keine Erkennung von Teilbetätigungen der beiden Schaltmittel 102, 103 implementiert ist. Das Auslösemittel 104 wurde in Fig. 4 und auch in den weiteren Figuren 5 und 6 aus Vereinfachungsgründen weggelassen.

Die Sicherheitsschaltvorrichtung 100 gemäß Fig. 4 stellt eine Not-Befehlsfunktion nur mit Informationsübertragung zur Verfügung. Die Sicherheitsschaltvorrichtung 100 wird nur über die beiden Anschlussleitungen 106, 107, die durch zwei räumlich voneinander getrennte Drähte beziehungsweise durch ein Adernpaar gebildet werden können, angesteuert. Wie oben bereits erläutert, wird die durch die einschlägigen Normen geforderte Zweikanaligkeit durch eine doppelte Bestimmung und einen Vergleich der Widerstandswerte R1, R2 erreicht.

Jedes der beiden Kanalauswertemittel 108, 109 verfügt über einen Microcontroller 116, 117 und eine Strommesseinrichtung 118, 119. Die Strommesseinrichtung 118 des ersten Kanalauswertemittels 108 ist über einen Transistor 120 mit einem ersten Potential 121 verbunden, welches die Betriebsspannung (vorliegend: 24 V) repräsentiert. Die Strommesseinrichtung 119 des zweiten Kanalauswertemittels 109 ist über einen Transistor 122 mit einem zweiten Potential 123 verbunden, welches das Massepotential GND repräsentiert. Die beiden Potentiale 121, 123 bilden somit aus funktionaler Sicht eine Spannungsquelle der Auswerteeinrichtung 105. Die beiden Microcontroller 116, 117 stehen über zwei Kommunikationsleitungen 110a, 110b, in denen jeweils ein Widerstand 124a, 124b vorgesehen ist, miteinander in bidirektionaler Kommunikationsverbindung. Anstelle zweier Kommunikationsleitungen 110a, 110b kann auch eine bidirektionale Kommunikationsleitung 110, wie in Fig. 1 bis 3 gezeigt, vorgesehen sein.

Die oben bereits erläuterte zweikanalige Widerstandsmessung, die von den Microcontrollern 116, 117 der beiden Kanalauswertemittel 108, 109 durchgeführt wird, erfolgt mithilfe der beiden Strommesseinrichtungen 118, 119 sowie zweier Operationsverstärker 125, 126, die jeweils an einen der Microcontroller 116, 117 angeschlossen sind und unter Zwischenschaltung eines Schutzwiderstands 127, 128 mit einem der beiden Anschlüsse S12, S21 der Auswerteeinrichtung 105 elektrisch verbunden sind. Die Schutzwiderstände 127, 128 dienen hierbei zur Entkopplung der beiden Kanäle bei Fehlern und müssen den Fehler "Kurzschluss" als Fehlerausschlusskriterium haben. Beispielsweise können zu diesem Zweck Kohleschicht-MELF-Widerstände, Metallfilm-MELF-Widerstände oder Drahtwiderstände verwendet werden. Die Spannung wird dabei differentiell gemessen. Der Strom wird vorzugsweise ebenfalls differentiell gemessen. Die Operationsverstärker 125, 126 dienen somit zur zweimaligen, voneinander unabhängigen differentiellen Spanungsmessung und die Strommesseinrichtungen 118, 119 dienen zur zweimaligen, voneinander unabhängigen Strommessung. Daraus können die Microcontroller 116 und 117 zweikanalig und jeweils unabhängig voneinander den Widerstandswert der an die Anschlüsse S12 und S21 angeschlossenen Not-Befehlseinrichtung 101 bestimmen.

Jeder der beiden Microcontroller 116, 117 ist dazu ausgebildet, über den daran angeschlossenen Transistor 120, 122 des betreffenden Kanalauswertemittels 108, 109 ein Pulsmuster aufzumodulieren. Dieses hat zur Folge, dass so genannte "Stuck-at-Fehler" in den Strom- oder Spannungseingängen erkannt werden können. Einer der beiden Microcontroller 116, 117 sendet das Pulsmuster und der andere der beiden Microcontroller 116, 117 erkennt das Pulsmuster sowohl über seinen Strom- als auch über seinen Spannungseingang. Als Pulsmuster wird vorzugsweise die eindeutige Identifikationskennung des sendenden Microcontrollers 116, 117 oder eine Zufallszahl gesendet, die auf dem zugehörigen internen Kommunikationskanal 110a, 110b dem jeweils anderen Microcontroller 116, 117 vor der Erzeugung des Pulsmusters mitgeteilt wird. Die Zufallszahl kann durch einen Pseudo-Random-Algorithmus erzeugt werden. Alternativ kann ein Rauschen, insbesondere ein weißes Rauschen, einer Rauschschaltung über einen Analogeingang diskretisiert werden. Es soll an dieser Stelle angemerkt werden, dass es nicht zwingend ein Rauschen sein muss, sondern allgemein eine zufällige Spannung ausreichend ist. Auf diese Weise können Kurzschlüsse mit benachbarten Sicherheitsschaltvorrichtungen 100 beziehungsweise benachbarten Auswerteeinrichtungen 105 detektiert werden, da sich das gesendete und das empfangene Pulsmuster voneinander unterscheiden.

Jeder der beiden Microcontroller 116, 117 ist dazu ausgebildet, das vorliegend als Relais ausgebildete Schaltelement 111, 112 des zugehörigen Kanals im Ausgangskreis anzusteuern. Hierzu ist aber zur Erhöhung der Sicherheit die Zustimmung des Microcontrollers 116, 117 des jeweils anderen Kanals erforderlich, so dass in vorteilhafter Weise in diesem Ausführungsbeispiel eine so genannte "Wired-And-Schaltung" implementiert ist. Vorzugsweise werden unterschiedliche Schaltprinzipien angewendet, um eine Diversität zu erzielen, wie zum Beispiel eine statische und dynamische Ansteuerung. Vorzugsweise sollten möglichst viele Teile der beiden Kanalauswertemittel 108, 109 diversitär ausgebildet sein, um dadurch so genannte "Common-Cause"-Fehler ausschließen zu können.

Im Eingangskreis 101 der Sicherheitsschaltvorrichtung 100 sind mehrere Widerstände, vorliegend der Querschlusserfassungswiderstand 113 und die beiden Teilbetätigungserfassungswiderstände 114, 115, mit verschiedenen Widerstandswerten verbaut, um so die verschiedenen Schaltzustände der Schaltmittel 102, 103 voneinander unterscheiden zu können. Der Querschlusserfassungswiderstand 113 sowie die Teilbetätigungserfassungswiderstände 114, 115 sind vorzugsweise als Kohleschicht-MELF-Widerstände, Metallfilm-MELF-Widerstände oder Drahtwiderstände ausgebildet, um dadurch die FMEA-Fehlerfälle Kurzschluss und Widerstandsdrift ausschließen zu können, was nach der DIN EN 13849-2, Anhang D möglich ist. Der Querschlusserfassungswiderstand 113 und die beiden Teilbetätigungserfassungswiderstände 114, 115 können hochohmig ausgelegt sein, was erheblich größere Leitungswiderstände beziehungsweise längere Adernpaare zulässt. Die Widerstände 124a, 124b in den Kommunikationsleitungen 110a, 110b zwischen den beiden Microcontrollern 116, 117 sowie die mit den Spannungseingängen verbundenen Schutzwiderstände 127, 128 sind vorzugsweise ebenfalls als MELF-Widerstände, insbesondere als Kohleschicht-MELF-Widerstände oder Metallfilm-MELF-Widerstände, oder als Drahtwiderstände ausgebildet, um in vorteilhafter Weise eine Rückwirkungsfreiheit zwischen den Auswertekanälen durch den Ausschluss von Kurzschlüssen sicherstellen zu können.

Die Widerstandswerte des Querschlusserfassungswiderstands 113 und der beiden Teilbetätigungserfassungswiderstände 114, 115 müssen im Hinblick auf den möglichen Leitungswiderstand, mögliche Widerstandstoleranzen und die Genauigkeit der Kanalauswertemittel 108, 109 sowie hinsichtlich eventuell auftretender Störpegel sorgfältig aufeinander abgestimmt werden. Dadurch ergeben sich Widerstandsbereiche, welche bestimmte Zustände repräsentieren. Diese Widerstandsbereiche müssen möglichst weit voneinander entfernt liegen, dürfen nicht aneinandergrenzen und sich erst recht nicht überlappen, so dass die Auswertung durchaus eine gewisse Ungenauigkeit haben darf und somit kostengünstig ausgeführt werden kann. Diese Überlegungen sollen nachfolgend anhand eines Zahlenbeispiels näher erläutert werden, welches ausdrücklich nicht als einschränkend zu verstehen ist.

Die Werte in der nachfolgenden Tabelle 1 basieren auf der Annahme, dass jeder Leitungswiderstand der Anschlussleitungen 106, 107 bis zu 30 Ohm beträgt. Der Widerstandswert des Querschlusserfassungswiderstands 113 wurde mit 1 kOhm angenommen und für die Teilbetätigungserfassungswiderstände 114, 115 wurden Widerstandswerte von 2 kOhm (erster Teilbetätigungserfassungswiderstand 114) und 4 kOhm (zweiter Teilbetätigungserfassungswiderstand 115) angenommen.

**Tabelle 1:**

| Bereich | Wertebereich | Detektierter Zustand |
|---|---|---|
| 1 | 0 Ohm bis 60 Ohm | Querschluss zwischen den Anschlüssen S12 und S21 |
| 2 | > 60 Ohm bis 1000 Ohm | Fehlerzustand, nicht definierter Bereich |
| 3 | > 1000 Ohm bis 1060 Ohm | Normalbetrieb, die elektrischen Schaltmittel 102, 103 im Eingangskreis wurden nicht geöffnet |
| 4 | > 1060 Ohm bis 3000 Ohm | Fehlerzustand, nicht definierter Bereich |
| 5 | > 3000 Ohm bis 3060 Ohm | Teilbetätigung, das erste elektrische Schaltmittel 102 wurde geöffnet oder Verschweißen des zweiten elektrischen Schaltmittels 103 |
| 6 | > 3060 Ohm bis 5000 Ohm | Fehlerzustand, nicht definierter Bereich |
| 7 | > 5000 Ohm bis 5060 Ohm | Teilbetätigung, das zweite elektrische Schaltmittel 103 wurde geöffnet oder Verschweißen des ersten elektrischen Schaltmittels 102 |
| 8 | > 5060 Ohm bis 7000 Ohm | Fehlerzustand, nicht definierter Bereich |
| 9 | > 7000 Ohm bis 7060 Ohm | Vollbetätigung, die beiden elektrischen Schaltmittel 102, 103 des |
| | | Eingangskreises wurden geöffnet und dadurch unterbrochen |
| 10 | > 7060 Ohm bis etwa 10 kOhm | Bereich zur Vergrößerung des Toleranzbereichs |
| 11 | > 10 kOhm | Kabelbruch |

Die in Tabelle 1 angegebenen Widerstandsbereiche skizzieren nur das allgemeine Prinzip und können durch Änderung der Widerstandswerte grundsätzlich geändert und angepasst werden. Die Bereiche müssen insbesondere so gewählt sein, dass Bauteiltoleranzen, Alterung und Umwelteinflüsse nicht zu Fehlinterpretationen führen. Obige Widerstandswerte sind hier beispielsweise so ausgelegt, dass zum Detektieren der nicht ausgelösten Not-Befehlseinrichtung 101 eine maximale elektrische Leistung von 576 mW aufgewendet werden muss. Es besteht aber grundsätzlich die Möglichkeit, die Schaltung bedeutend hochohmiger auszuführen, sofern die Messeinrichtungen es zulassen und genau genug sind.

Beim Feststellen eines verschweißten Kontakts im Eingangskreis 101 muss der Fehler in der Auswerteeinrichtung 105, vorzugsweise in nicht-flüchtigen Speichermitteln der Microcontroller 106, 107 dauerhaft gespeichert werden, bis ein funktionierender Eingangskreis mit den beiden geöffneten (funktionsfähigen) elektrischen Schaltelementen 102, 103 festgestellt wurde.

Der Eingangskreis 101 besteht vorliegend im Wesentlichen aus einem einzigen Kreis, dessen Strom an den Anschlüssen S12 und S21 der Auswerteeinrichtung 105 gemessen wird. Wenn eine Fremdeinspeisung vorliegt, ist der Stromfluss in den zweiten Anschluss S21 hinein größer als der Stromfluss aus dem ersten Anschluss S12 heraus. Wenn ein vollständiger oder teilweiser Masseschluss vorliegt, ist der Strom in den zweiten Anschluss S21 hinein kleiner als der Strom aus dem ersten Anschluss S12 heraus. Da das erste Kanalauswertemittel 108 und das zweite Kanalauswertemittel 109 miteinander kommunizieren, können sie neben den gemessenen Widerständen R1, R2 auch die gemessenen Ströme austauschen und im Falle einer Abweichung, welche die Messtoleranz übersteigt, übereinstimmend einen Fehler detektieren und jeweils ihre Ausgänge deaktivieren, so dass die vorliegend als Relais ausgebildeten Schaltelemente 111, 112 geöffnet und dadurch in einen elektrisch sperrenden Zustand überführt werden.

Die Messeingänge der in Fig. 4 dargestellten Schaltung können vorzugsweise durch Entstörglieder, wie zum Beispiel Entstörkondensatoren, EMV-resistent gemacht werden und durch Schutzorgane, wie zum Beispiel durch TVS-Dioden, gegen externe Überspannungseinflüsse geschützt werden. Dieses gilt grundsätzlich auch für die übrigen, hier offenbarten Schaltungen.

Die gemessenen Widerstandswerte R1, R2 werden über die Kommunikationsleitungen 110a, 110b zwischen dem Microcontroller 116 des ersten Kanalauswertemittels 108 für den ersten Kanal und dem Microcontroller 117 des zweiten Kanalauswertemittels 108 für den zweiten Kanal ausgetauscht. Nur wenn beide Microcontroller 116, 117 entsprechende Widerstandswerte R1, R2 im Bereich Nr. 3 gemäß Tabelle 1 detektieren, darf jeder Microcontroller 116, 117 seine Zustimmung zum Anziehen der Relais, welche die ausgangsseitigen Schaltelemente 111, 112 bilden, geben. Bei allen anderen Bereichen und bei nicht übereinstimmenden Ergebnissen wird die Zustimmung entzogen und die Relais fallen in ihren Ruhezustand zurück ("Wired-And-Prinzip").

Unter Bezugnahme auf Fig. 5 soll nachfolgend eine Weiterbildung der in Fig. 4 dargestellten Sicherheitsschaltvorrichtung 100 näher erläutert werden, welche die Möglichkeit bietet, aktiv elektrisch arbeitende Schaltmittel 102, 103 im Eingangskreis mit elektrischer Energie zu versorgen. Die grundlegende Schaltungstopologie sowie die grundlegenden Funktionalitäten in Bezug auf die Erfassung der Schaltzustände der Schaltmittel 102, 103 sind mit dem Ausführungsbeispiel gemäß Fig. 4 identisch, so dass nachfolgend wiederum nur auf die Unterschiede eingegangen werden soll.

Jedes der beiden Kanalauswertemittel 108, 109 kann an seinem Ausgang, also am Anschluss S12 beziehungsweise am Anschluss S21, sowohl ein erstes (insbesondere positives) als auch ein zweites (insbesondere negatives) Potential bereitstellen, wie zum Beispiel +24 V und Massepotential GND. Zu diesem Zweck weisen die beiden Kanalauswertemittel 108, 109 jeweils einen ersten Transistor 129, 130 und einen zweiten Transistor 131, 132 auf.

Wenn der erste Transistor 129 des ersten Kanalauswertemittels 108 elektrisch leitend ist und der zweite Transistor 131 des ersten Kanalauswertemittels 108 elektrisch sperrend ist, ist die zugehörige Strommesseinrichtung 118 mit dem ersten Potential (vorliegend: + 24 V) verbunden. Wenn der erste Transistor 129 des ersten Kanalauswertemittels 108 elektrisch sperrend ist und der zweite Transistor 131 des ersten Kanalauswertemittels 108 elektrisch leitend ist, ist die Strommesseinrichtung 118 mit dem zweiten Potential (vorliegend: Massepotential, GND) verbunden.

Wenn der erste Transistor 130 des zweiten Kanalauswertemittels 109 elektrisch leitend ist und der zweite Transistor 132 des zweiten Kanalauswertemittels 109 elektrisch sperrend ist, ist die zugehörige Strommesseinrichtung 119 mit dem zweiten Potential (vorliegend: Massepotential, GND) verbunden. Wenn der erste Transistor 130 des zweiten Kanalauswertemittels 109 elektrisch sperrend ist und der zweite Transistor 132 des zweiten Kanalauswertemittels 109 elektrisch leitend ist, ist die Strommesseinrichtung 119 mit dem ersten Potential (vorliegend: + 24 V) verbunden.

Auf diese Weise kann man in der einen Stromflussrichtung den Status der Not-Befehlseinrichtung 101 detektieren und in der anderen (entgegengesetzten) Stromflussrichtung die aktiv elektrisch arbeitenden Schaltmittel 102, 103 der Not-Befehlseinrichtung 101 elektrisch versorgen, wenn die Not-Befehlseinrichtung 101 zum Beispiel als aktivierbarer Not-Halt oder als Türschalter, welcher auf dem Prinzip eines induktiven Näherungsschalters basiert, ausgeführt ist. Auf diese Weise lassen sich in vorteilhafter Weise über die beiden ohnehin vorgesehenen Anschlussleitungen 106, 107 ohne zusätzlichen Verdrahtungsaufwand auch aktiv arbeitende Schaltmittel 102, 103 im Eingangskreis 101 verdrahten und so deren Energieversorgung bereitstellen, ohne dass Fremdenergie über ein weiteres Adernpaar zur Verfügung gestellt werden muss. Die Stromrichtung wird hierbei periodisch gewechselt, um dadurch zwischen den Zuständen "Auswertung" und "Energieversorgung" hin und her zu wechseln.

Im Eingangskreis ist ein Energiespeichermittel vorgesehen, welches die beiden Schaltmittel 102, 103 des Eingangskreises kurzzeitig elektrisch versorgen kann, während die Auswertung der Schaltzustände stattfindet. Das Energiespeichermittel ist vorliegend durch einen Energiespeicherkondensator 133 gebildet, der parallel zu den elektrischen Schaltmitteln 102, 103 des Eingangskreises geschaltet ist und elektrisch in Reihe mit einer Diode 134, welche den Stromfluss nur in eine Richtung zulässt, geschaltet ist.

Unter Bezugnahme auf Fig. 6 soll nachfolgend ein weiteres Ausführungsbeispiel einer Sicherheitsschaltvorrichtung 100 näher erläutert werden. Anders als bei den in Fig. 4 und 5 im Detail dargestellten Ausführungsbeispielen ist hierbei auch die Möglichkeit gegeben, ein oder mehrere Schaltelemente 135, die im Ausgangskreis an die Microcontroller 116, 117 der beiden Kanalauswertemittel 108, 109 angeschlossen sind, aktiv mit elektrischer Energie zu versorgen. In diesem Ausführungsbeispiel ist ausgangsseitig ein Schaltelement 135 vorgesehen, welches als Doppelanker-Relais mit zwei elektrisch in Reihe geschalteten Schließerkontakten (Arbeitskontakten) ausgebildet ist.

Die in Fig. 6 gezeigte Sicherheitsschaltvorrichtung 100 stellt die grundlegenden Funktionalitäten der oben beschriebenen Sicherheitsschaltvorrichtungen 100 ebenfalls zur Verfügung, so dass nachfolgend in erster Linie wieder auf die Unterschiede eingegangen werden soll.

Wie in Fig. 6 zu erkennen, verfügen die beiden Kanalauswertemittel 108, 109 in diesem Ausführungsbeispiel zusätzlich über einen Kondensator 136, 137 sowie über eine Induktivität 138, 139, um für eine Entkopplung zu sorgen und so mittels der Microcontroller 116, 117 ein Datensignal auf das Messsignal im Eingangskreis aufzumodulieren und zu empfangen. Die Induktivität 138 und der Transistor 120 des ersten Kanalauswertemittels 108 sind elektrisch in Reihe geschaltet und mit dem ersten Potential 121, welches die Betriebsspannung (vorliegend + 24V) repräsentiert, verbunden. Das Schaltelement 135 im Ausgangskreis, welches als Doppelanker-Relais ausgeführt ist, ist mit dem zweiten Potential 123 (Massepotential GND) verbunden. Die beiden Potentiale 121, 123 bilden somit aus funktionaler Sicht eine Spannungsquelle der Auswerteeinrichtung 105.

Ausgangsseitig ist an jeden der beiden Microcontroller 116, 117 jeweils ein Transistor 140, 141 angeschlossen. Die Transistoren 140, 141 sowie das ausgangsseitige Schaltelement 135 sind elektrisch in Reihe geschaltet.

Die Ansteuerung des ausgangsseitigen, vorliegend als Doppelanker-Relais ausgebildeten Schaltelements 135 funktioniert über zwei diversitäre Wege. Zum einen wird über die beiden Anschlussleitungen 106, 107 der Sicherheitsschaltvorrichtung 1 die Spannungsversorgung für das Schaltelement 135 im Ausgangskreis bereitgestellt, wenn die Schaltmittel 102, 103 im Eingangskreis 101 geschlossen und die Transistoren 140, 141 im Ausgangskreis elektrisch leitend sind und zum anderen kann eine Kommunikation über die Anschlussleitungen 106, 107 erfolgen, um die Schaltzustände der Schaltmittel 102, 103 im Eingangskreis zu erfassen.

Das Datensignal wird zum Beispiel vom Microcontroller 116 des ersten Kanalauswertemittels 108 mit einer 8-Bit/10-Bit-Codierung auf die Spannungsversorgung über den Kondensator 136 des ersten Kanalauswertemittels 108 aufmoduliert. Diese 8-Bit/10-Bit-Codierung ist ein beispielhaftes gängiges Verfahren, um eine 8-Bit-Zahl in 10 Bits darzustellen und dabei eine möglichst gleichwertige Verteilung der Zustände "0" und "1" zu erhalten. Die 8-Bit-Zahl wird zufällig erzeugt und intern über die Kommunikationsleitung 110a sowie extern über die Anschlussleitungen 106, 107 bei geschlossenen Schaltelementen 102, 103 des Eingangskreises 101 mit dem Microcontroller 117 des zweiten Kanalauswertemittels 109 ausgetauscht. Sollte diese Kommunikation fehlschlagen, geht die Sicherheitsschaltvorrichtung 100 automatisch in einen sicheren Zustand über. Die Transistoren 140, 141 werden dabei in einen elektrisch sperrenden Zustand überführt und die Arbeitskontakte (Schließerkontakte) des als Doppelanker-Relais ausgebildeten Schaltelements 135 werden geöffnet. Zusätzlich zu dem Kondensator 136 des ersten Kanalauswertemittels 108 können weitere Bauteile zum Senden des Datensignals vorgesehen werden. Über den Kondensator 137 wird das Datensignal wieder ausgekoppelt und empfangen.

Mittels der in Fig. 6 dargestellten Schaltungstopologie ist es insbesondere auch möglich, dass Stuck-at-Fehler in den Strom- oder Spannungseingängen erkannt werden können. Als Pulsmuster wird die eindeutige Identifikationskennung des sendenden Microcontrollers 116 oder eine Zufallszahl gesendet, die über die interne Kommunikationsleitung 110a dem anderen (empfangenden) Microcontroller 117 vorab mitgeteilt wird. Die Zufallszahl kann durch einen Pseudo-Random-Algorithmus erzeugt oder durch das Rauschen einer Rauschschaltung über einen Analogeingang im sendenden Microcontroller 116 diskretisiert werden.

Bei einem Auslösen des Not-Befehls werden die Schaltmittel 102, 103 des Eingangskreises geöffnet. Dadurch werden die Spannungsversorgung sowie die Kommunikation unterbrochen. Das als Doppelanker-Relais ausgebildete Schaltelement 115 wird über die Transistoren 140, 141 aufgrund der fehlenden Spannung nicht mehr angesteuert und die Arbeitskontakte werden geöffnet.

Die in Fig. 6 dargestellte Schaltungsanordnung ermöglicht über den Querschlusserfassungswiderstand 113 wiederum eine Querschlusserkennung im Eingangskreis 101. Unter der Annahme eines maximalen Leitungswiderstands von beispielsweise 30 Ohm kann im Eingangskreis 101 zum Beispiel ein Querschlusserfassungswiderstand 113 mit einem Widerstandswert >70 Ohm (beispielsweise 75 Ohm) verbaut werden.

Die Messung der Widerstände R1, R2 erfolgt wie in den oben erläuterten Ausführungsbeispielen zweikanalig über die beiden Operationsverstärker 125, 126 und die Schutzwiderstände 127, 128. Die Spannung wird dabei differentiell gemessen. Der Strom wird mittels der Strommesseinrichtungen 118, 119 ebenfalls differentiell gemessen.

Wenn die gemessenen Widerstände in diesem Zahlenbeispiel ≤ 35 Ohm sind, liegt ein Querschluss vor. Bei diesem Wert von 35 Ohm ist ein möglicher Widerstandsdrift des Widerstandswerts des Querschlusserfassungswiderstands 113 bereits mit einbezogen. Bei der Fehlerbetrachtung der Sicherheitsnormen muss ein Widerstandsdrift auf den halben Wert angenommen werden. Der Querschlusserfassungswiderstand 113 muss so gewählt werden, dass dieser nicht mit einem Kurzschluss ausfallen kann. Für die Messung des Widerstandswerts muss kurzeitig die Datenübertragung unterbrochen werden, da diese das Ergebnis verfälschen könnte.

Nachfolgend soll angenommen werden, dass die beiden Teilbetätigungserfassungswiderstände 114, 115 einen Widerstandswert von 10 kOhm aufweisen. Zu jedem der Teilbetätigungserfassungswiderstände 114, 115 ist eine Diode 144, 145 elektrisch in Reihe geschaltet, welche den Stromfluss nur in eine Richtung zulässt. In diesem Ausführungsbeispiel können auch verschweißte Kontakte der Schaltmittel 102, 103 im Eingangskreis 101 erfasst werden. Beim Not-Befehl-Test oder Aktivieren der Not-Befehlseinrichtung 101 wird eine Widerstandmessung von beiden Seiten durchgeführt. Wird ein hochohmiger Widerstand von über 20 kOhm gemessen, funktioniert der Not-Befehl. Sollte ein Kontakt verschweißt sein, werden demgegenüber nur 10 kOhm gemessen, so dass die Not-Befehlseinrichtung 101 danach nicht weiterarbeiten darf. Erst nach einem Reset mit funktionierenden Kontakten der Schaltmittel 102, 103 darf die Not-Befehlseinrichtung 101 wieder ihren normalen Betrieb aufnehmen. Bei einem Fehler, dass eine der Dioden 144, 145 einen Kurzschluss hat, muss der zugehörige Teilbetätigungserfassungswiderstand 114, 115 so hochohmig sein, dass ein Halten des als Doppelanker-Relais ausgebildeten Schaltelements 135 im Ausgangskreis unmöglich ist.

In allen hier vorgestellten Schaltungstopologien können weitere Sicherheitsmaßnahmen implementiert sein, so dass bewährte Prinzipien zur Feststellung von Fehlern und zum Fehlerausschluss sowie zur Fehlervermeidung vorgesehen werden können.

Zum Beispiel kann ein Test der Öffnerkontakte der Schaltmittel 102, 103 im Eingangskreis zur Testung auf Verschweißungen der Arbeitskontakte (Schließerkontakte) im Ausgangskreis nach dem Einschalten vorgesehen sein.

Vorzugsweise kann ein nicht zeitgleiches Schalten der Schließerkontakte im Ausgangskreis erfolgen, um zu erreichen, dass ein Kontakt "trocken" (das heißt stromlos) schaltet, um die Aufrechterhaltung einer Abschaltmöglichkeit bei fehlerhafter Absicherung zu erreichen.

Es können unterschiedliche Microcontroller 116, 117 beziehungsweise Portbelegungen der beiden Kanäle vorgesehen sein sowie unterschiedliche Bauteile für kritische Schaltungsteile, wie zum Beispiel Referenzspannungsquellen, verwendet werden.

Es können Watchdog-Schaltungen in den Kanalauswertemitteln 108, 109 implementiert sein. Ferner können Speicherprüfungen in den Microcontrollern 116, 117 vorgesehen sein.

Das hier vorgestellte Konzept lässt sich bei einer Vielzahl von Not-Befehlsanwendungen mit zwei Schaltmitteln 102, 103 im Eingangskreis einsetzen. Neben manuell auslösbaren Not-Haltbeziehungsweise Not-Aus-Befehlsgeräten kann das Konzept zum Beispiel auch auf Lichtschranken, Türkontakte, Zuhaltungen etc. mit zwei Schaltmitteln 102, 103 in einem Eingangskreis übertragen werden.

Es besteht die Möglichkeit, die Funktionen der beiden Microcontroller 116, 117 auch in einem einzigen Microcontroller zu vereinen. Zwei Microcontroller 116, 117, wie sie in den hier beschriebenen Ausführungsbeispielen vorgesehen sind, erhöhen jedoch das Sicherheitsniveau.

Grundsätzlich können auch mehrere Not-Befehlskreise vorgesehen sein, die elektrisch in Reihe geschaltet sind. Durch eine Aufsummierung der Querschlusserfassungswiderstände 113 können die Microcontroller 116, 117 feststellen, wie viele Not-Halt-Kreise in Reihe geschaltet sind.

## Patentansprüche

1. Sicherheitsschaltvorrichtung (100), umfassend
- eine Not-Befehlseinrichtung (101), die ein erstes elektrisches Schaltmittel (102) und ein zweites elektrisches Schaltmittel (103), die in einem Eingangskreis elektrisch in Reihe geschaltet sind, aufweist, wobei die Not-Befehlseinrichtung (101) einen ersten Anschluss (E12) und einen zweiten Anschluss (E21) im Eingangskreis, die mit den Schaltmitteln (102, 103) elektrisch verbunden sind, sowie ein Auslösemittel (104) aufweist, welches dazu ausgebildet ist, bei einer Auslösung die Schaltzustände der beiden Schaltmittel (102, 103) gemeinsam zu verändern, insbesondere die beiden Schaltmittel (102, 103) elektrisch zu sperren,
- eine Auswerteeinrichtung (105) mit einer Spannungsquelle (121, 123), einem ersten Anschluss (S12), der mittels einer ersten Anschlussleitung (106) an den ersten Anschluss (E12) der Not-Befehlseinrichtung (101) angeschlossen ist, und mit einem zweiten Anschluss (E21), der mittels einer zweiten Anschlussleitung (107) an den zweiten Anschluss (E21) der Not-Befehlseinrichtung (101) angeschlossen ist,
- zumindest ein Schaltelement (111, 112, 135) in einem Ausgangskreis, an das ein Verbraucher, insbesondere eine Maschine, anschließbar ist,
wobei die Auswerteeinrichtung (105) ein erstes Kanalauswertemittel (108) und ein zweites Kanalauswertemittel (109) aufweist, die beide sowohl an den ersten Anschluss (S12) als auch an den zweiten Anschluss (S21) der Auswerteeinrichtung (105) angeschlossen sind, wobei das erste Kanalauswertemittel (108) dazu ausgebildet ist, eine elektrische Spannung zwischen dem ersten Anschluss (S12) und dem zweiten Anschluss (S21) und den Strom, der durch den ersten Anschluss (S12) fließt, zu messen und daraus einen ersten Widerstandswert (R1) zu bestimmen, und wobei das zweite Kanalauswertemittel (109) dazu ausgebildet ist, eine elektrische Spannung zwischen dem zweiten Anschluss (S21) und dem ersten Anschluss (S12) und den Strom, der durch den zweiten Anschluss (S21) fließt, zu messen und daraus einen zweiten Widerstandswert (R2) zu ermitteln, und wobei die Kanalauswertemittel (108, 109) dazu ausgebildet sind, das elektrische Schaltelement (111, 112, 135) im Ausgangskreis derart anzusteuern, dass es in Abhängigkeit von den ermittelten Widerstandwerten (R1, R2) in einen elektrisch leitenden oder in einen elektrisch sperrenden Zustand geschaltet wird.

2. Sicherheitsschaltvorrichtung (100) nach Anspruch 1, **dadurch gekennzeichnet, dass** die Kanalauswertemittel (108, 109) dazu ausgebildet sind, das elektrische Schaltelement (111, 112, 135) im Ausgangskreis nur dann derart anzusteuern, dass es elektrisch leitend wird, wenn von beiden Kanalauswertemitteln (108, 109) übereinstimmend ein Widerstandswert (R1, R2) ermittelt worden ist, der eine geschlossene Stellung der beiden Schaltmittel (102, 103) im Eingangskreis indiziert.

3. Sicherheitsschaltvorrichtung (100) nach einem der Ansprüche 1 oder 2, **dadurch gekennzeichnet, dass** die Sicherheitsschaltvorrichtung (100) einen Querschlusserfassungswiderstand (113) aufweist, der mit den beiden Schaltmitteln (102, 103) des Eingangskreises elektrisch in Reihe geschaltet ist.

4. Sicherheitsschaltvorrichtung (100) nach einem der Ansprüche 1 bis 3, **dadurch gekennzeichnet, dass** die Sicherheitsschaltvorrichtung (100) zwei Teilbetätigungserfassungswiderstände (114, 115) aufweist, wobei ein erster Teilbetätigungserfassungswiderstand (114) im Eingangskreis parallel zum ersten elektrischen Schaltmittel 102 geschaltet ist und ein zweiter Teilbetätigungserfassungswiderstand (115) im Eingangskreis parallel zum zweiten elektrischen Schaltmittel (103) geschaltet ist.

5. Sicherheitsschaltvorrichtung (100) nach Anspruch 4, **dadurch gekennzeichnet, dass** die Widerstandswerte der Teilbetätigungserfassungswiderstände (114, 115) gleich oder unterschiedlich gewählt sind.

6. Sicherheitsschaltvorrichtung (100) nach einem der Ansprüche 1 bis 5, **dadurch gekennzeichnet, dass** eines der beiden Kanalauswertemittel (108, 109) dazu ausgebildet ist, ein Pulsmuster zu erzeugen, und das andere der beiden Kanalauswertemittel (108, 109) dazu ausgebildet ist, das Pulsmuster zu empfangen und auszuwerten.

7. Sicherheitsschaltvorrichtung (100) nach einem der Ansprüche 1 bis 6, **dadurch gekennzeichnet, dass** die Kanalauswertemittel (108, 109) dazu ausgebildet sind, die von ihnen gemessenen Spannungen und Ströme miteinander zu vergleichen und bei einer Abweichung, welche außerhalb der Messtoleranz liegt, das elektrische Schaltelement (111, 112, 135) im Ausgangskreis derart anzusteuern, dass es in einen elektrisch sperrenden Zustand geschaltet wird.

8. Sicherheitsschaltvorrichtung (100) nach einem der Ansprüche 1 bis 7, **dadurch gekennzeichnet, dass** die Schaltmittel (102, 103) aktiv elektrisch schaltbar ausgebildet sind und dass die Kanalauswertemittel (108, 109) dazu ausgebildet sind, durch eine Umkehrung der Stromrichtung eine aktive Energieversorgung der elektrisch schaltbaren Schaltmittel (102, 103) bereitzustellen.

9. Sicherheitsschaltvorrichtung (100) nach Anspruch 8, **dadurch gekennzeichnet, dass** die Sicherheitsschaltvorrichtung (100) im Eingangskreis der Not-Befehlseinrichtung (101) ein Energiespeichermittel aufweist.

10. Sicherheitsschaltvorrichtung (100) nach einem der Ansprüche 1 bis 9, **dadurch gekennzeichnet, dass** die Sicherheitsschaltvorrichtung (100) dazu ausgebildet ist, eine aktive Spannungsversorgung für das Schaltelement (111, 112, 135) im Ausgangskreis bereitzustellen.
